# FASCICULE DE BREVET EUROPEEN

(11) **EP 3 366 581 B1**
(45) Date de publication et mention de la délivrance du brevet: **04.12.2019**
(21) Numéro de dépôt: 18157968.1
(22) Date de dépôt: 21.02.2018
(51) Int. Cl.: B64C 25/24, B64C 25/30

(54) **SYSTEME D'EXTENSION DE SECOURS D'ATTERRISSEUR D'AERONEF**
NOTAUSFAHRSYSTEM FÜR FAHRWERK EINES LUFTFAHRZEUGS
A SYSTEM FOR EMERGENCY EXTENSION OF AIRCRAFT LANDING GEAR

(30) Priorité: 24.02.2017 FR 1751504
(43) Date de publication de la demande: 29.08.2018
(73) Titulaire: Safran Landing Systems, 78140 Vélizy-Villacoublay (FR)
(72) Inventeur: PIERRA, Raphaël, 78140 Vélizy-Villacoublay (FR); ROUSSELET, Mathieu, 78140 Vélizy-Villacoublay (FR); PASCAL, Vincent, 78140 Vélizy-Villacoublay (FR); BELLEVAL, Jean-Luc, 78140 Vélizy-Villacoublay (FR)
(74) Mandataire: Lavaud, Thomas

(56) Documents cités:
- EP-A1- 2 312 721
- WO-A2-2011/157834

## Description

L'invention concerne le domaine des systèmes d'extension de secours d'atterrisseur d'aéronef. L'arrière-plan technologique est illustré par le document EP-A1-2312721.

### ARRIERE PLAN DE L'INVENTION

Les aéronefs modernes sont classiquement équipés d'un système d'extension de secours, qui utilise la gravité pour réaliser l'extension des atterrisseurs lorsque le système d'extension principal est défaillant. On parle généralement de système de *free-fall* pour désigner un tel système d'extension de secours.

Sur l'Airbus A320, le système d'extension de secours est un système entièrement mécanique.

Des systèmes d'embiellage effectuent le déverrouillage des trappes et des atterrisseurs, tout en réalisant au préalable l'ouverture des vannes hydrauliques et des vérins d'atterrisseur et des trappes.

Sur l'Airbus A330-A340, le système d'extension de secours a été partiellement électrifié. L'embiellage entre le cockpit et les baies d'atterrisseur a été supprimé. Chaque baie est équipée de trois moteurs électriques. Les moteurs électriques actionnent l'embiellage présent dans la baie pour actionner les vannes hydrauliques et déverrouiller la trappe et l'atterrisseur de la baie.

Sur l'Airbus A400M et sur l'Airbus A380, l'embiellage a été complètement supprimé. Le système d'extension de secours est un système « tout électrique ». Un calculateur centralisé pilote une pluralité d'actionneurs électromécaniques. Lorsque le pilote active le système d'extension de secours, le calculateur centralisé alimente tout d'abord un actionneur électromécanique d'actionnement d'une vanne d'isolation, qui est équipé de deux capteurs de fin de course indiquant au calculateur centralisé le début de l'actionnement et la fin de l'actionnement. Lorsque le calculateur centralisé détecte le début de l'actionnement, le calculateur centralisé démarre un compteur. Si le compteur dépasse une valeur temporelle jugée critique, le calculateur centralisé détecte que l'actionnement n'a pas été correctement réalisé. Par contre, si le compteur ne dépasse pas la valeur temporelle jugée critique, le calculateur centralisé considère que l'actionnement a été correctement réalisé et commande l'actionnement de l'actionneur électromécanique suivant.

### OBJET DE L'INVENTION

L'invention a pour objet de réduire le coût et d'augmenter la fiabilité d'un système d'extension de secours « tout électrique ».

### RESUME DE L'INVENTION

En vue de la réalisation de ce but, on propose un système d'extension de secours d'au moins un atterrisseur d'aéronef, le système d'extension de secours comprenant des actionneurs électromécaniques, chaque actionneur électromécanique comportant un composant d'identification agencé pour attribuer audit actionneur électromécanique un identifiant qui dépend notamment d'une fonction réalisée par ledit actionneur électromécanique, et une carte électrique comprenant un composant de retard agencé pour retarder un actionnement dudit actionneur électromécanique d'un retard d'actionnement qui dépend de l'identifiant attribué audit actionneur électromécanique, les actionneurs électromécaniques du système d'extension de secours étant ainsi agencés pour être actionnés successivement selon une séquence d'actionnement définie par les retards d'actionnement.

Ainsi, la séquence d'actionnement permettant l'extension en mode secours de l'atterrisseur est mise en œuvre sans que le système d'extension de secours selon l'invention ne comprenne de calculateur centralisé. Comme le calculateur centralisé est un équipement coûteux et complexe, la suppression du calculateur centralisé réduit le coût et augmente de manière importante la fiabilité du système d'extension de secours selon l'invention.

On note que le composant d'identification et le composant de retard peuvent être des composants simples, donc peu coûteux et fiables.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un boîtier d'accrochage et un actionneur électromécanique du système d'extension de secours selon l'invention, l'actionneur électromécanique étant agencé pour réaliser une fonction de déverrouillage d'un premier atterrisseur ;
- la figure 2 représente un boîtier d'accrochage et un actionneur électromécanique du système d'extension de secours selon l'invention, l'actionneur électromécanique étant agencé pour réaliser une fonction de déverrouillage d'un deuxième atterrisseur ;
- la figure 3 représente une carte électrique intégrée dans un actionneur électromécanique du système d'extension de secours selon l'invention ;
- la figure 4 représente un connecteur dont est équipé chaque actionneur électromécanique du système d'extension de secours selon l'invention, ainsi que l'allocation des contacts du connecteur ;
- la figure 5 représente une table d'identification par *pin programming ;*
- la figure 6 représente un levier de commande ;
- la figure 7 représente une séquence d'actionnement mise en œuvre dans le système d'extension de secours selon l'invention.

### DESCRIPTION DETAILLEE DE L'INVENTION

L'invention est ici mise en œuvre dans un aéronef comportant un atterrisseur auxiliaire, un atterrisseur principal côté gauche et un atterrisseur principal côté droit.

Le système d'extension de secours selon l'invention est agencé pour assurer une extension de l'atterrisseur auxiliaire, de l'atterrisseur principal côté gauche et de l'atterrisseur principal côté droit lorsqu'un système d'extension principal est défaillant.

Le système d'extension de secours selon l'invention comporte à cet effet un actionneur électromécanique réalisant une fonction d'actionnement d'une vanne d'isolation (ou actionneur d'isolation), un actionneur électromécanique réalisant une fonction d'actionnement d'une vanne de circulation de fluide pour l'atterrisseur auxiliaire (ou actionneur de circulation auxiliaire), un actionneur électromécanique réalisant une fonction d'actionnement d'une vanne de circulation de fluide pour l'atterrisseur principal côté gauche et pour l'atterrisseur principal côté droit (ou actionneur de circulation principal), un actionneur électromécanique réalisant une fonction de déverrouillage d'une trappe pour l'atterrisseur auxiliaire (ou actionneur de trappe auxiliaire), un actionneur électromécanique réalisant une fonction de déverrouillage d'une trappe pour l'atterrisseur principal côté gauche (ou actionneur de trappe principal côté gauche), un actionneur électromécanique réalisant une fonction de déverrouillage d'une trappe pour l'atterrisseur principal côté droit (ou actionneur de trappe principal côté droit), un actionneur électromécanique réalisant une fonction de déverrouillage de l'atterrisseur auxiliaire (ou actionneur d'atterrisseur auxiliaire), un actionneur électromécanique réalisant une fonction de déverrouillage de l'atterrisseur principal côté gauche (ou actionneur d'atterrisseur principal côté gauche), et un actionneur électromécanique réalisant une fonction de déverrouillage de l'atterrisseur principal côté droit (ou actionneur d'atterrisseur principal côté droit).

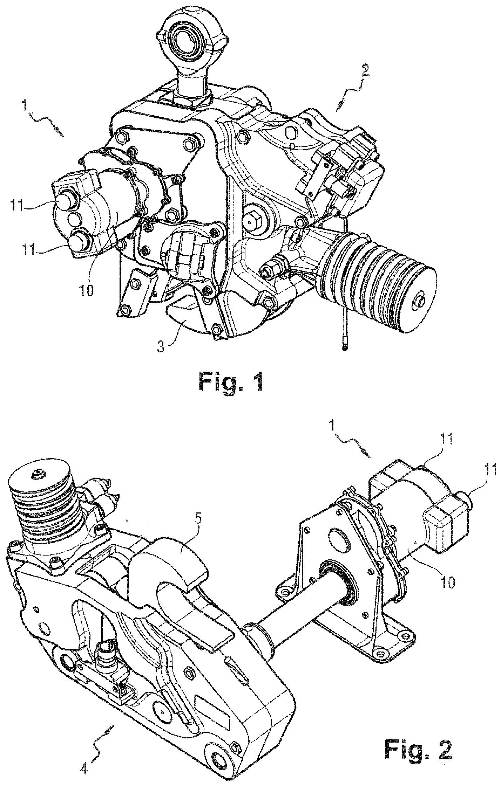

En référence à la figure 1, l'actionneur d'atterrisseur auxiliaire 1 (ou principal côté gauche ou principal côté droit) est intégré à un boîtier d'accrochage 2 comportant un crochet 3 pour verrouiller l'atterrisseur auxiliaire (ou principal côté gauche ou principal côté droit) en position rétractée. L'actionneur d'atterrisseur auxiliaire 1 agit sur le crochet 3 pour déverrouiller l'atterrisseur auxiliaire et permettre son extension lorsqu'il convient d'étendre l'atterrisseur auxiliaire et que le système d'extension principal est défaillant.

En référence à la figure 2, l'actionneur d'atterrisseur auxiliaire 1 (ou principal côté gauche ou principal côté droit) est intégré à un boîtier d'accrochage 4 comportant un crochet 5 pour verrouiller l'atterrisseur auxiliaire (ou principal côté gauche ou principal côté droit) en position rétractée. L'actionneur d'atterrisseur auxiliaire 1 agit sur le crochet 5 pour déverrouiller l'atterrisseur auxiliaire et permettre son extension lorsqu'il convient d'étendre l'atterrisseur auxiliaire et que le système d'extension principal est défaillant.

Les neuf actionneurs électromécaniques qui viennent d'être cités sont ici identiques (et, en particulier, l'actionneur d'atterrisseur auxiliaire 1 est identique à l'actionneur de trappe auxiliaire 1).

Chaque actionneur électromécanique 1 comporte un carter 10, un moteur électrique triphasé, un arbre moteur, deux étages de trains d'engrenage, un organe d'actionnement, deux connecteurs électriques 11 et deux cartes électriques.

On note que certains éléments sont présents en double dans l'actionneur électromécanique, ce qui permet de redonder les fonctions réalisées par ces éléments et donc d'augmenter la fiabilité du système d'actionnement de secours selon l'invention pour qu'il soit conforme aux spécifications produites par le systémier ou par le fabriquant de l'aéronef.

Le moteur électrique triphasé comporte un stator double bobinage, comportant deux bobinages physiquement ségrégués. L'arbre moteur est équipé d'aimants permanents et forme ainsi un rotor du moteur électrique triphasé, qui coopère avec le stator double bobinage.

L'organe d'actionnement est entraîné par le moteur électrique triphasé et par l'un des étages de trains d'engrenage pour agir sur le crochet d'un boîtier d'accrochage (comme sur le crochet 3 du boîtier d'accrochage 2 ou sur le crochet 5 du boîtier d'accrochage 4) ou sur une vanne d'isolation ou de circulation

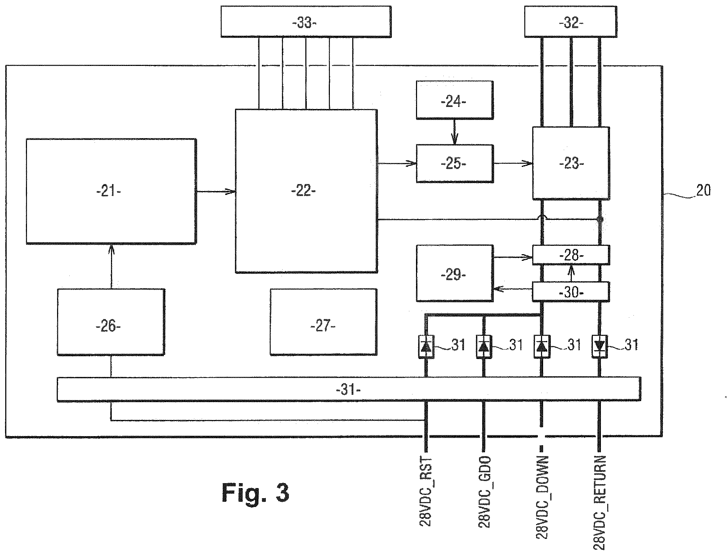

En référence à la figure 3, la carte électrique 20 comporte des moyens de traitement 21, un composant de contrôle moteur 22, un onduleur triphasé 23, une alimentation isolée d'onduleur 24, des pilotes d'onduleur 25 (ou *drivers*)*,* un composant de remise à zéro 26 de l'actionneur électromécanique, une alimentation auxiliaire 27, une résistance de freinage 28, un composant de gestion de la résistance de freinage 29, des capteurs 30, et des composants de protection 31.

Les moyens de traitement 21 comprennent un composant de traitement et un composant de retard, en l'occurrence un filtre RC. Le rôle du filtre RC sera expliqué plus tard.

Le composant de traitement est par exemple un microcontrôleur ou un processeur ou un FPGA. Le composant de traitement pilote le fonctionnement de l'actionneur électromécanique et des différents composants de la carte électrique 20. Il gère notamment les durées d'activation et de désactivation des différents composants de la carte électrique 20, ainsi que la vitesse de rotation du moteur électrique triphasé 32 en coopérant avec le composant de contrôle moteur 22.

Le composant de contrôle moteur 22 reçoit une consigne de vitesse du moteur électrique triphasé 32 générée par le composant de traitement 21, et commande les pilotes d'onduleurs 25 en fonction de cette consigne de vitesse et en fonction de mesures de la position du rotor du moteur électrique triphasé 32.

Les mesures de la position du rotor du moteur électrique triphasé 32 sont produites par des capteurs de position 33 intégrés au moteur électrique triphasé 32. Les capteurs de position 33 comprennent ici des sondes à effet Hall discrètes.

Le composant de remise à zéro 26 est agencé pour remettre à zéro l'actionneur électromécanique, c'est à dire pour réinitialiser la carte électrique 20 et pour replacer l'organe d'actionnement dans une position de repos.

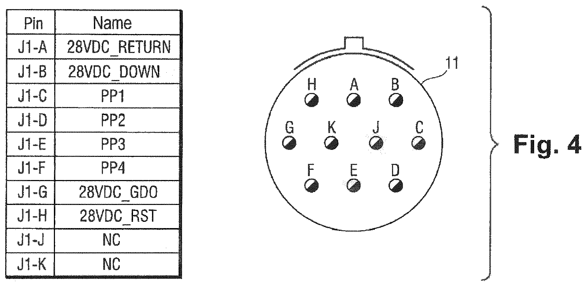

En référence à la figure 4, chaque connecteur 11 de l'actionneur électromécanique comporte ici dix contacts J1-A, J1-B, J1-C, J1-D, J1-E, J1-F, J1-G, J1-H, J1-J et J1-K.

Comme cela est visible sur le tableau d'allocation des contacts de la figure 4, le contact J1-B reçoit une alimentation d'extension 28VDC_DOWN, le contact J1-H reçoit une alimentation de remise à zéro 28VDC_RST, et le contact J1-G reçoit une alimentation de maintenance 28VDC_GDO. Toutes ces alimentations sont des alimentations en 28V continu fournies par le réseau électrique embarqué. Le contact J1-A assure le retour des alimentations 28VDC_RETURN, c'est à dire que les courants électriques circulant dans la carte électrique 20 et dans le moteur électrique triphasé 32 sont évacués par le contact J1-A. Le contact J1-C est un contact de *pin programming* PP1, le contact J1-D est un contact de *pin programming* PP2, le contact J1-E est un contact de *pin programming* PP3, et le contact J1-F est un contact de *pin programming* PP4.

Chaque connecteur 11 de chaque actionneur électromécanique est relié à un câble comprenant un connecteur complémentaire du connecteur 11. Le câble est ainsi susceptible de fournir à la carte électrique 20, via le connecteur complémentaire et le connecteur 11, l'alimentation d'extension 28VDC_DOWN, l'alimentation de remise à zéro 28VDC_RST et l'alimentation de maintenance 28VDC_GDO, et d'évacuer les courants électriques circulant dans la carte électrique 20 et dans le moteur électrique triphasé 32.

L'état des contacts de *pin programming* PP1, PP2, PP3 et PP4 est défini via le câble qui attribue ainsi un identifiant à l'actionneur électromécanique.

On note ici que l'utilisation du *pin programming* a pour conséquence une augmentation de la taille du connecteur 11 utilisé par rapport à un connecteur ne comportant pas de contact de *pin programming,* mais dans des proportions limitées. L'augmentation de la taille du connecteur 11 est ainsi, typiquement, de moins de 10 mm au niveau du diamètre du connecteur 11. L'augmentation de la taille du connecteur 11 entraîne une augmentation de masse d'environ 25g par actionneur électromécanique, ce qui représente moins de 2% de la masse totale de l'actionneur électromécanique.

On note aussi qu'un sectionneur, situé dans le réseau électrique embarqué, interdit l'application simultanée sur un connecteur 11 de l'alimentation d'extension 28VDC_DOWN et de l'alimentation de remise à zéro 28VDC_RST.

On décrit maintenant plus en détail le fonctionnement du système d'extension de secours selon l'invention.

Lorsque les actionneurs électromécaniques sont installés sur l'aéronef, un identifiant est attribué à chaque actionneur électromécanique via le *pin programming.*

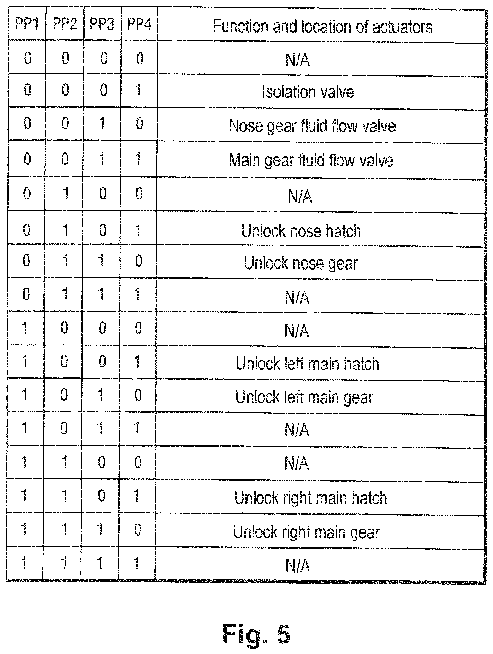

L'identifiant est ici formé de quatre valeurs binaires (0 ou 1). Chaque valeur binaire correspond à un signal haut ou à un signal bas appliqué par câblage sur les contacts de *pin programming* PP1, PP2, PP3 et PP4. La figure 5 représente la table d'identification utilisée.

On voit ainsi sur la figure 5 que l'identifiant, fonction du *pin programming,* dépend d'une fonction réalisée par l'actionneur électromécanique ainsi que d'un atterrisseur pour l'extension duquel ledit actionneur électromécanique est utilisé.

Les différentes fonctions, pour rappel, sont la fonction de déverrouillage d'une trappe, la fonction de déverrouillage d'un atterrisseur, la fonction d'actionnement d'une vanne d'isolation et la fonction d'actionnement d'une vanne de circulation de fluide.

Les différents atterrisseurs, pour rappel, sont l'atterrisseur auxiliaire, l'atterrisseur principal côté gauche et l'atterrisseur principal côté droit.

Le composant de traitement de la carte électrique 20 de chaque actionneur électromécanique règle le filtre RC pour définir un retard d'actionnement qui dépend de l'identifiant dudit actionneur électromécanique. Le réglage du filtre RC peut consister à connecter ou déconnecter sélectivement un ou plusieurs condensateurs ou une ou plusieurs résistances.

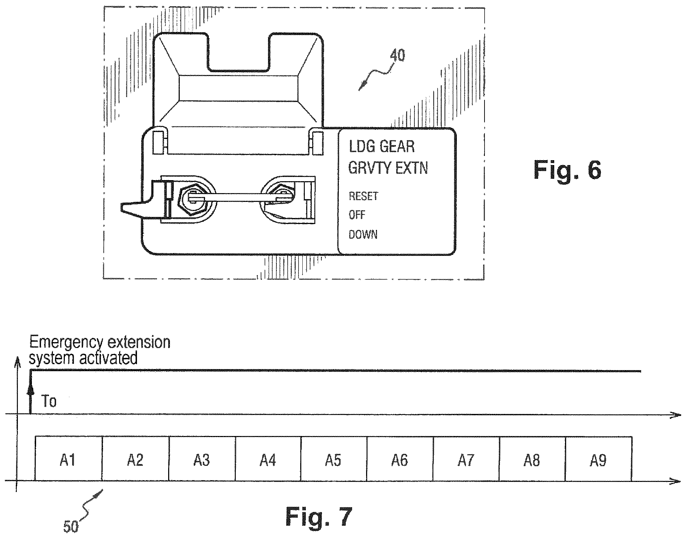

Lorsque le pilote de l'aéronef décide de commander une extension des atterrisseurs grâce au système d'extension de secours selon l'invention, le pilote agit sur un levier de commande 40 tel que celui représenté sur la figure 6. Il place alors le levier de commande 40 dans la position DOWN.

Chaque connecteur 11 de chaque actionneur électromécanique reçoit alors l'alimentation d'extension 28VDC_DOWN sur le contact J1-B.

La réception de l'alimentation d'extension 28VDC_DOWN signifie que le composant de traitement doit commander des composants d'extension, impliqués dans l'extension de l'atterrisseur associé, pour que les composants d'extension soient activés de manière à réaliser l'extension de l'atterrisseur associé. Les composants d'extension comprennent l'onduleur triphasé 23, les pilotes d'onduleur 25, l'alimentation isolée d'onduleur 24, etc.

La carte électrique 20, et notamment les composants d'extension, ainsi que le moteur électrique triphasé 32, sont alors alimentés par l'alimentation d'extension 28VDC_DOWN.

Le composant de traitement commande l'actionnement dudit actionneur électromécanique avec le retard d'actionnement qui dépend de l'identifiant dudit actionneur électromécanique. Le retard d'actionnement est compté à partir d'un moment où la carte électrique 20 dudit actionneur électromécanique est alimentée par l'alimentation d'extension 28VDC_DOWN via le contact J1-B.

Ainsi, lorsque le pilote de l'aéronef commande une extension des atterrisseurs grâce au levier de commande 40, les actionneurs électromécaniques du système d'extension de secours sont actionnés successivement selon une séquence d'actionnement définie par les retards d'actionnement.

La séquence d'actionnement 50 est visible sur la figure 7. La séquence d'actionnement 50 débute au moment T0 où le système d'extension de secours selon l'invention est activé.

L'actionneur d'isolation est presque instantanément actionné (actionnement A1), ce qui signifie que son retard d'actionnement est très faible, voire nul.

Les autres actionneurs électromécaniques sont alors successivement actionnés dans l'ordre qui suit : actionneur de circulation auxiliaire (actionnement A2), actionneur de circulation principal (actionnement A3), actionneur de trappe auxiliaire (actionnement A4), actionneur de trappe principal côté gauche (actionnement A5), actionneur de trappe principal côté droit (actionnement A6), actionneur d'atterrisseur auxiliaire (actionnement A7), actionneur d'atterrisseur principal côté gauche (actionnement A8) et actionneur d'atterrisseur principal côté droit (actionnement A9). L'actionneur d'atterrisseur principal côté droit présente donc le retard d'actionnement le plus important.

Chaque actionneur électromécanique est actionné pendant un intervalle de temps prédéterminé, qui est ici égal à 2s. La durée totale de la séquence d'actionnement est donc égale à 18s. Comme le temps maximal requis pour l'extension de secours des atterrisseurs est classiquement fixé à 30s, le système d'extension de secours selon l'invention laisse environ 12s pour l'extension des atterrisseurs, ce qui est une durée acceptable.

On note qu'il peut être avantageux de réaliser en même temps l'extension de l'atterrisseur auxiliaire, de l'atterrisseur principal côté gauche et de l'atterrisseur principal côté droit. Dans ce cas, les retards d'actionnement associés à l'actionneur d'atterrisseur auxiliaire, à l'actionneur d'atterrisseur principal côté gauche et à l'actionneur d'atterrisseur principal côté droit sont égaux.

Lorsqu'un opérateur décide de commander une remise à zéro des actionneurs électromécaniques du système d'extension de secours selon l'invention, le pilote agit sur le levier de commande 40. Il place alors le levier de commande 40 dans la position RESET.

Chaque connecteur 11 de chaque actionneur électromécanique reçoit alors l'alimentation de remise à zéro 28VDC_RST sur le contact J1-H.

La réception de l'alimentation de remise à zéro 28VDC_RST signifie que le composant de traitement doit commander de composant de remise à zéro 26 pour qu'il remette à zéro l'actionneur électromécanique.

La carte électrique 20, et notamment le composant de remise à zéro 26, ainsi que le moteur électrique triphasé 32, sont alimentés par l'alimentation de remise à zéro 28VDC_RST.

L'alimentation de maintenance 28VDC_GDO, quant à elle, est susceptible d'être fournie uniquement aux actionneurs électromécaniques qui réalisent une fonction de déverrouillage des trappes. L'ouverture des trappes est ici réalisée au sol, dans le cadre d'une opération de maintenance.

La réception de l'alimentation de maintenance 28VDC_GDO signifie que le composant de traitement doit commander des composants de maintenance de la carte électrique 20, qui sont impliqués dans le déverrouillage des trappes.

La carte électrique 20, et notamment les composants de maintenance, ainsi que le moteur électrique triphasé 32, sont alimentés par l'alimentation de maintenance 28VDC_GDO.

Bien entendu, l'invention n'est pas limitée au mode de réalisation décrit mais englobe toute variante entrant dans le champ de l'invention telle que définie par les revendications.

Bien que l'on ait ici utilisé un filtre RC comme composant de retard, il aurait été possible d'utiliser un autre composant de retard, par exemple un compteur analogique. Il aurait aussi été possible d'utiliser un composant d'identification différent.

L'invention s'applique bien sûr à tout type d'aéronef et à tout type d'atterrisseur.

## Revendications

1. Système d'extension de secours d'au moins un atterrisseur d'aéronef, le système d'extension de secours comprenant des actionneurs électromécaniques (1), chaque actionneur électromécanique comportant un composant d'identification (11) agencé pour attribuer audit actionneur électromécanique (1) un identifiant qui dépend notamment d'une fonction réalisée par ledit actionneur électromécanique, et une carte électrique (20) comprenant un composant de retard agencé pour retarder un actionnement dudit actionneur électromécanique d'un retard d'actionnement qui dépend de l'identifiant attribué audit actionneur électromécanique, les actionneurs électromécaniques du système d'extension de secours étant ainsi agencés pour être actionnés successivement selon une séquence d'actionnement (50) définie par les retards d'actionnement.

2. Système d'extension de secours selon la revendication 1, dans lequel le retard d'actionnement de chaque actionneur électromécanique est compté à partir d'un moment où la carte électrique (20) dudit actionneur électromécanique est alimentée.

3. Système d'extension de secours selon la revendication 1, dans lequel le composant de retard de chaque actionneur électromécanique comporte un filtre RC.

4. Système d'extension de secours selon la revendication 1, dans lequel le composant de retard de chaque actionneur électromécanique comporte un compteur analogique.

5. Système d'extension de secours selon la revendication 1, dans lequel le composant d'identification de chaque actionneur électromécanique comporte un connecteur comprenant des contacts (J1-C, J1-D, J1-E, J1-F) agencés pour réaliser une identification par *pin programming.*

6. Système d'extension de secours selon la revendication 1, dans lequel les cartes électriques (20) des actionneurs électromécaniques sont identiques.

7. Système d'extension de secours selon la revendication 1, dans lequel les actionneurs électromécaniques sont identiques.

8. Système d'extension de secours selon la revendication 1, dans lequel, dans chaque actionneur électromécanique, la carte électrique (20) comporte un composant d'extension (23, 24, 25) et un composant de remise à zéro (26), et dans lequel l'actionneur électromécanique comporte un connecteur (11) qui comprend un contact d'alimentation d'extension via lequel la carte électrique reçoit une alimentation d'extension (28VDC_DOWN) pour alimenter le composant d'extension lorsqu'une extension de l'atterrisseur doit être réalisée, et un contact d'alimentation de remise à zéro via lequel la carte électrique reçoit une alimentation de remise à zéro (28VDC_RST) pour alimenter le composant de remise à zéro lorsque l'actionneur électromécanique doit être remis à zéro.

9. Système d'extension de secours selon la revendication 8, dans lequel la carte électrique comporte en outre un composant de maintenance, et dans lequel le connecteur comprend un contact d'alimentation de maintenance via lequel la carte électrique reçoit une alimentation de maintenance (28VDC_GDO) pour alimenter le composant de maintenance lorsqu'une opération de maintenance doit être réalisée.

10. Système d'extension de secours selon la revendication 9, dans lequel l'opération de maintenance est une ouverture d'une trappe réalisée lorsque l'aéronef est au sol.

11. Système d'extension de secours selon la revendication 1, dans lequel la pluralité d'actionneurs électromécaniques comporte un actionneur électromécanique réalisant une fonction de déverrouillage d'une trappe et un actionneur électromécanique réalisant une fonction de déverrouillage de l'atterrisseur.

12. Système d'extension de secours selon la revendication 1, dans lequel la pluralité d'actionneurs électromécaniques comporte un actionneur électromécanique réalisant une fonction d'actionnement d'une vanne d'isolation et un actionneur électromécanique réalisant une fonction d'actionnement d'une vanne de circulation de fluide.

13. Système d'extension de secours selon la revendication 1, le système d'extension de secours étant agencé pour assurer une extension d'une pluralité d'atterrisseurs, l'identification de chaque actionneur électromécanique dépendant aussi d'un atterrisseur pour l'extension duquel ledit actionneur électromécanique est utilisé.

14. Système d'extension de secours selon les revendications 11 et 13, dans lequel les retards d'actionnement, associés à des actionneurs électromécaniques réalisant une fonction de déverrouillage de l'atterrisseur auxiliaire, de l'atterrisseur principal côté gauche et de l'actionneur d'atterrisseur principal côté droit, sont égaux.

## Patentansprüche

1. Notausfahrsystem für mindestens ein Luftfahrzeugfahrwerk, wobei das Notausfahrsystem elektromechanische Aktoren (1) umfasst, wobei jeder elektromechanische Aktor eine Identifizierungskomponente (11) umfasst, die ausgebildet ist, um dem genannten elektromechanischen Aktor (1) eine Identifizierung zuzuweisen, die insbesondere von einer Funktion abhängt, die von dem genannten elektromechanischen Aktor ausgeführt wird, sowie eine elektrische Karte (20), die eine Verzögerungskomponente umfasst, die ausgebildet ist, um eine Betätigung des elektromechanischen Aktors um eine Betätigungsverzögerung zu verzögern, die von der dem elektromechanischen Aktor zugewiesenen Identifizierung abhängt, wobei die elektromechanischen Aktoren des Notausfahrsystems folglich ausgebildet sind, um nacheinander gemäß einer Betätigungsfolge (50) betätigt zu werden, die von den Betätigungsverzögerungen definiert wird.

2. Notausfahrsystem nach Anspruch 1, bei dem die Betätigungsverzögerung jedes elektromechanischen Aktors ab einem Zeitpunkt gezählt wird, zu dem die elektrische Karte (20) des genannten elektromechanischen Aktors gespeist wird.

3. Notausfahrsystem nach Anspruch 1, bei dem die Verzögerungskomponente jedes elektromechanischen Aktors ein RC-Filter umfasst.

4. Notausfahrsystem nach Anspruch 1, bei dem die Verzögerungskomponente jedes elektromechanischen Aktors einen Analogzähler umfasst.

5. Notausfahrsystem nach Anspruch 1, bei dem die Identifizierungskomponente jedes elektromechanischen Aktors einen Verbinder umfasst, der Kontakte (J1-C, J1-D, J1-E, J1-F) enthält, die ausgebildet sind, um eine Identifizierung mittels Pin-Programmierung durchzuführen.

6. Notausfahrsystem nach Anspruch 1, bei dem die elektrischen Karten (20) der elektromechanischen Aktoren identisch sind.

7. Notausfahrsystem nach Anspruch 1, bei dem die elektromechanischen Aktoren identisch sind.

8. Notausfahrsystem nach Anspruch 1, bei dem die elektrische Karte (20) in jedem elektromechanischen Aktor eine Ausfahrkomponente (23, 24, 25) und eine Nullrückstellungskomponente (26) enthält und bei dem der elektromechanische Aktor einen Verbinder (11) umfasst, der einen Ausfahrstromversorgungskontakt umfasst, über den die elektrische Karte eine Ausfahrstromversorgung (28VDC_DOWN) empfängt, um die Ausfahrkomponente zu speisen, wenn ein Ausfahren des Fahrwerks erfolgen muss, und einen Nullrückstellungsstromversorgungskontakt, über den die elektrische Karte eine Nullrückstellungsstromversorgung (28VDC_RST) empfängt, um die Nullrückstellungskomponente zu speisen, wenn der elektromechanische Aktor auf Null rückgestellt werden muss.

9. Notausfahrsystem nach Anspruch 8, bei dem die elektrische Karte ferner eine Wartungskomponente umfasst und bei dem der Verbinder einen Wartungsstromversorgungskontakt umfasst, über den die elektrische Karte eine Wartungsstromversorgung (28VDC_GDO) empfängt, um die Wartungskomponente zu speisen, wenn ein Wartungsvorgang durchgeführt werden muss.

10. Notausfahrsystem nach Anspruch 9, bei dem der Wartungsvorgang ein Öffnen einer Klappe ist, das durchgeführt wird, wenn das Flugzeug am Boden ist.

11. Notausfahrsystem nach Anspruch 1, bei dem die Vielzahl von elektromechanischen Aktoren einen elektromechanischen Aktor umfasst, der eine Entriegelungsfunktion zur Entriegelung einer Klappe ausführt, sowie einen elektromechanischen Aktor, der eine Entriegelungsfunktion zur Entriegelung des Fahrwerks ausführt.

12. Notausfahrsystem nach Anspruch 1, bei dem die Vielzahl von elektromechanischen Aktoren einen elektromechanischen Aktor umfasst, der eine Betätigungsfunktion zur Betätigung eines Absperrventils ausführt, sowie einen elektromechanischen Aktor, der eine Betätigungsfunktion zur Betätigung eines Fluidzirkulationsventils ausführt.

13. Notausfahrsystem nach Anspruch 1, wobei das Notausfahrsystem ausgebildet ist, um ein Ausfahren einer Vielzahl von Fahrwerken sicherzustellen, wobei die Identifizierung jedes elektromechanischen Aktors auch von einem Fahrwerk abhängt, für dessen Ausfahren der genannte elektromechanische Aktor verwendet wird.

14. Notausfahrsystem nach den Ansprüchen 11 und 13, bei dem die Betätigungsverzögerungen, die mit den elektromechanischen Aktoren verbunden sind, die eine Entriegelungsfunktion des Hilfsfahrwerks, des linksseitigen Hauptfahrwerks und des rechtsseitigen Hauptfahrwerks ausführen, gleich sind.

## Claims

1. An emergency extension system for extending an least one aircraft undercarriage, the emergency extension system comprising both electromechanical actuators (1), each electromechanical actuator having an identification component (11) arranged to allocate an identifier to said electromechanical actuator (1), which identifier depends in particular on a function performed by said electromechanical actuator, and also an electrical card (20) having a delay component arranged to delay actuation of a said electromechanical actuator by an actuation delay that depends on the identifier allocated to said electromechanical actuator, the electromechanical actuators of the emergency extension system thus being arranged to be actuated in succession in an actuation sequence (50) that is defined by the actuation delays.

2. An emergency extension system according to claim 1, wherein the actuation delay of each electromechanical actuator is measured from the moment when the electrical card (20) of electromechanical actuator is powered.

3. An emergency extension system according to claim 1, wherein the delay component of each electromechanical actuator comprises an RC filter.

4. An emergency extension system according to claim 1, wherein the delay component of each electromechanical actuator comprises an analog counter.

5. An emergency extension system according to claim 1, wherein the identification component of each electromechanical actuator comprises a connector having contacts (J1-C, J1-D, J1-E, J1-F) that are arranged to perform identification by pin programming.

6. An emergency extension system according to clam 1, wherein the electrical cards (20) of the electromechanical actuators are identical.

7. An emergency extension system according to claim 1, wherein the electromechanical actuators are identical.

8. An emergency extension system according to claim 1, wherein, in each electromechanical actuator, the electrical card (20) includes an extension component (23, 24, 25) and a reset component (26), and wherein the electromechanical actuator includes a connector (11) having an extension power supply contact via which the electrical card receives an extension power supply (28VDC_DOW) for powering the extension component when the undercarriage is to be extended, and a reset power supply contact via which the electrical card receives a reset power supply (28VDC_RST) for powering the reset component when the electromechanical actuator is to be reset.

9. An emergency extension system according to claim 8, wherein the electrical card further includes a maintenance component, and wherein the connector has a maintenance power supply contact via which the electrical card receives a maintenance power supply (28VDC_GDO) for powering the maintenance component when a maintenance operation is to be performed.

10. An emergency extension system according to claim 9, wherein the maintenance operation is opening a hatch while the aircraft is on the ground.

11. An emergency extension system according to claim 1, wherein the plurality of electromechanical actuators includes an electromechanical actuator performing a function of unlocking a hatch and an electromechanical actuator performing a function of unlocking the undercarriage.

12. An emergency extension system according to claim 1, wherein the plurality of electromechanical actuators includes an electromechanical actuator performing a function of actuating an isolation valve and an electromechanical actuator performing a function of actuating a fluid flow valve.

13. An emergency extension system according to claim 1, wherein the emergency extension system is arranged to extend a plurality of undercarriages, and the identification of each electromechanical actuator also depends on which undercarriage said electromechanical actuator is used to extend.

14. An emergency extension system according to claims 11 and 13, wherein the actuation delays, associated with electromechanical actuators performing a function of unlocking the nose undercarriage, the left main undercarriage, and the right main undercarriage, are equal.
